# EUROPEAN PATENT SPECIFICATION

(11) **EP 1 723 197 B1**
(45) Date of publication and mention of the grant of the patent: **04.11.2009**
(21) Application number: 05725221.5
(22) Date of filing: 08.03.2005
(51) Int. Cl.: C08K 3/04, C08K 3/08, C08K 5/14, C08K 5/16

(54) **THERMALLY CONDUCTIVE TWO-PART ADHESIVE COMPOSITION**
WÄRMELEITFÄHIGE ZWEIKOMPONENTIGE KLEBSTOFFZUSAMMENSETZUNG
COMPOSITION ADHESIVE THERMOCONDUCTRICE EN DEUX PARTIES

(30) Priority: 09.03.2004 US 551577 P
(43) Date of publication of application: 22.11.2006
(73) Proprietor: Henkel Corporation, Rocky Hill, Connecticut 06067 (US); Loctite (R & D) Limited, Tallaght, Dublin 24 (IE)
(72) Inventor: EARLE, James, J.,, Scotts Valley, CA 95066 (US); LAKES, Aisling Mary, Knocklyon, Dublin, 16 (IE)
(74) Representative: Lane, Cathal Michael
(86) International application number: PCT/US2005/007915
(87) International publication number: WO 2005/087850

(56) References cited:
- EP-A- 0 263 586
- EP-A- 1 347 027
- WO-A-2004/056933
- US-A- 3 901 858
- US-A- 3 901 858
- US-A- 5 298 791
- US-B1- 6 462 126

## Description

### Background to the Invention

### Field of the Invention

The present invention relates generally to thermally conductive adhesives in particular those which are useful for bonding electronic components and assisting in the dissipation therefrom of heat generated during the operation thereof.

### Brief Description of Related Technology

Advances in the electronic industry have made thermal management an increasingly important consideration, particularly with respect to packaging issues. For instance, heat build-up in electronic products leads to reduced reliability ("mean-time-to-failure"), slower performance, and reduced power-handling capabilities. In addition, continued interest in increasing the number of electronic components on, and reducing the size of, semiconductor chips, notwithstanding the desire generally to reduce power consumption thereof, also contributes to the importance of thermal management. Also, chip-on-board technology, where semiconductor chips are mounted directly to printed circuit boards ("pcb"), creates further demands on thermal management because of the more efficient use of surface area thereon (that is, greater real estate density on the pcb).

Thermal management or heat dissipation techniques include generally convection or conduction mechanisms, where heat may be removed from electronic devices (such as operating silicon integrated circuits) by air (e.g., free flowing or forced) convection around the device, fluid (e.g., water or fluorocarbons) convection through radiators, or conduction through parts thereof which are in physical contact. A combination of such techniques is often used to maintain temperatures within design criteria.

Heat convection involves heat transfer across an interface which is proportional to (1) the amount of area exposed, (2) the temperature differential, and (3) the heat transfer coefficient, at the interface. Heat conduction, on the other hand, involves heat flow per unit area over a length which is proportional to the temperature gradient across that length. Thus, heat conduction (or thermal conductivity) is a steady-state property measuring the ability of a certain material to transfer heat there through. All else being equal, convection requires a larger surface area than conduction to allow the same amount of heat to dissipate. Of course, with continued size reduction of electronic packaging, surface area is reduced, thereby rendering convection less desirable.

A heat sink, constructed from a light weight thermally conductive material, such as aluminium alloy or graphite composite, is often used with electronic devices to facilitate heat dissipation therefrom. The heat sink should have sufficient mass to obtain a heat capacity which does not exceed a heat flow to the environment, which itself should be matched with heat flow from devices with which the heat sink is to be used.

Heat sinks have heretofore had varying measures of success. One reason for such variance is interfacial thermal resistance between the heat sink and the heat-generating electronic device. Generally, such resistance may be minimized by positioning at the interface junction between the electronic device and the heat sink a material having (1) high thermal conductivity, (2) intimate surface contact with the heat sink and electronic device, and (3) good durability, such as is measured by thermal cycling which detects failure or performance loss at the interface junction between the heat sink and the heat-generating device. Mechanical fasteners and thermally conductive greases, mica chips and ceramic insulators, pads and tapes, and adhesives have been used as such heat sinks or interface materials.

Mechanical fasteners are durable, but often provide high interfacial thermal resistance due to microscopic interfacial voids, which are present even in highly polished surfaces.

Surface contact with such fasteners may be improved using a thermal grease which penetrates such interfacial or surface voids, thereby effectively lowering interfacial thermal resistance. However, such greases generally tend to lack solvent resistance and often migrate over time out of the interface junction.

Some users also consider thermal greases to be time-consuming and messy to apply, and difficult to cleanup. In addition, upon application of a thermal grease, solder processes should be avoided to minimize contamination. It is also advisable to avoid placing in cleaning baths thermal grease-containing components so as to minimize wash out of the thermal grease from the interface junction, the result of which would cause both a dry junction (and hence increased thermal resistance) and bath contamination.

Mica chips are inexpensive and have excellent dielectric strength; however, they are also brittle and easily damaged. In addition, mica itself has high thermal impedance, and as a result thermal greases are ordinarily also applied thereto. Ceramic insulators are costly and brittle, and thus easily damaged like mica chips.

Thermally conductive pads are laminated composite materials, which are often coated with pressure-sensitive adhesives to facilitate bonding and good thermal contact with the substrate surfaces between which they are positioned. See e.g., U.S. Patent No. 4,574,879 (DeGree). Examples of such conductive pads include those commercially available from the W.R Grace unit, Chomerics, Inc., Woburn, Massachusetts under the "CHO-THERM" trademark. The core of the pad generally is highly thermal conductive, while the coating itself is a compliant material having low thermal conductivity.

Thus, thermal performance of conductive pads is often a function of mounting pressure and operating temperature, with the degree of surface penetration of the coating to the mating surfaces determining interfacial thermal resistance. Thermally conductive tapes perform in a like manner. See e.g., U.S. Patent No. 5,510,174 (Litman).

Thermally conductive adhesives are curable (as contrasted to greases which are not intended to be curable) but like greases often contain thermally conductive fillers, commercially available examples of which include those supplied by Thermoset, Indianapolis, Indiana or Creative Materials Incorporated, Tyngsboro, Massachusetts. These adhesives perform in a similar manner to greases, except that the adhesives, if formulated and applied properly and to appropriate surfaces, should not migrate from the interface junction.

Various thermally conductive adhesives are known for use in a number of applications, such as sealants, fuser roll coatings in electrostatic copying machines, bonding media, and the like. Resins employed in such compositions should themselves be thermally stable, examples of which include silicone, epoxy, phenolic, vinyl and acrylic materials. Silicones are particularly desirable resins because of, for instance, their high elasticity for tress relief, low moisture uptake, ionic purity, wide-range temperature performance, and excellent electrical properties, such as electrical insulating properties.

It is often desirable, however, to enhance the thermal conductivity of such adhesives, which of course depends on the conductivity of the resin itself.

Improved thermal conductivity may often be attained by the addition of a conductive filler to the resin matrix. [See Handbook of Fillers for Plastics, 6.1, 255, H.S. Katz and J.V. Milewski, eds., Van Nostrand Reinhold Co.,New York (1987); see also U.S. Patent Nos. 4,147,669 (Shaheen) (gallium, aluminum, and gold, copper or silver in a resin); 4,544,696 (Streusand), 4,584,336 (Pate) and 4,588,768 (Streusand) (silicon nitride-containing organopolysiloxane with aluminum oxide or zinc oxide); 5,011,870 (Peterson) (aluminum nitride, and silicon metal and boron nitride in a polyorganosilicone resin matrix); and 5,352,731 (Nakano) (aluminum oxide-containing silicone rubber).]

U.S. Patent No. 5,430,085 (Acevedo) describes a thermally and electrically conductive caulk including a resin, such as silicone, mixed with a filler which includes 80% by weight conductive particles with a particle size in the range of 300 to 325 microns, 10% by weight conductive particles with a particle size in the range of 75 to 80 microns, and 10% by weight conductive fibres having a length in the range of 0.020 to 0.025 inches.

U.S. Patent No. 4,604, 424 (Cole) describes thermally conductive silicone elastomers containing a polydiorganosiloxane, a curing agent, a platinum-containing hydrosilation catalyst, and zinc oxide and magnesium oxide fillers, the particle size of which fillers is such that substantially all of the filler particles pass through a 325 mesh screen, and the average particle size of which fillers is below 10 microns. The filler is composed of 50% to 90% zinc oxide, and 10% to 50% magnesium oxide, each by weight of the filler. Other fillers (up to 40% by weight) include aluminum oxide, ferric oxide and carbon black. The cured elastomers are said to resist erosion by abrasive materials to a greater extent than compositions containing aluminum oxide as the sole filler.

In U.S. Patent No. 5,445, 308 (Nelson), another method of improving thermal conductivity provides a connection between spaced surfaces by mixing a thermally conductive filler containing a liquid metal (e.g., gallium, gallium/indium, gallium/indium/tin and/or mercury) into an unhardened matrix material (e.g., thermoplasts, thermosets, W-curable materials, epoxies and solvent-bearing materials) and thereafter hardening the matrix material.

An English-language abstract of Japanese Patent Document JP 07-292251 appears to relate to curable thermally conductive electrically insulating magnesium oxide-containing silicone compositions. U.S. Patent No. 3,901,858 recites two-part curable (meth)acrylate composition comprising stabilizing agents for use in embedment and casting applications. EP Patent Nos. 1347027 & 263586 relate to one-part pressure sensitive adhesives that show electrical conductivity.

Chemical Abstracts CA 124: 124432r (1996) refers to explosive compaction of aluminum nitride powders for use with silane elastomer precursors, which when polymerized are reported to have improved thermal conductivity of the so-formed polymer-ceramic composites.

Thermally conductive adhesives eliminate the need for mechanical fasteners and clips while providing an efficient method of thermal transfer between heat generating electronics devices and their heat sinks. Examples of such applications are the bonding of transformers, transistors and other heat generating electronic components to printed circuit board assemblies or heat sinks.

Many commercially available thermally conductive adhesives comprise one-component activator based systems in which the activator is solvent based. Such systems can be problematic in terms of time, as the activator must be applied to the bonding surface before the adhesive is dispensed. In addition, the use of activators can be undesirable in circumstances where the composition of the activator can lead to health and safety issues, for example skin sensitization. There is therefore a need to provide a thermally conductive adhesive system that would eliminate many of these problems but would maintain the favorable characteristics of the exiting products.

Of course many curable compositions which are not thermally conductive in the cured state exist for many different end-use applications. Those compositions are formulated as one-part or two-part compositions depending on chemistry etc.

A product that has existed for some time is Loctite product no. 3257A/B. This material is described in Material Safety Data Sheet (MSDS) No. 0158392 for part A and 0158925 for part B. As can be seen from the MSDS the composition is a two-part composition in which part A of the composition comprises the following components:

### Part A

1. Resin
2. Curative
3. Promoter

### Part B

4. Resin
5. Catalyst

This composition is described as being useful for applications where good impact and heat resistance is required such as bonding ferrites into motor cans.

Notwithstanding the state of the art there is still a need to provide alternative thermally conductive compositions that can be employed for dissipating heat generated by electronic components and the like. Such compositions should be relatively easy to handle, cure under desired conditions and be storage stable.

Thermally conductive adhesives that are at present common in the market-place include single component, activator-based systems. In the aforementioned systems, activator is applied to one of the bonding faces and the single component thermally conductive adhesive is subsequently dispensed on top of the activator system. The activator system effects cross-linking of the single component adhesive and complete cure can be thus effected within hours or even minutes, either at ambient temperature or a temperature slightly elevated above ambient, depending on the system chosen.

Although very acceptable thermal conductivities are obtained from such systems, often in the range of 0.7-2.0 W/mK, the use of activator can lead to several processing difficulties. Firstly, many activators are solvent-based and/or contain materials which give rise to odour. This can be unpleasant for those applying the activator and can lead to respiratory issues in some instances. Secondly, the activator is applied to the bonding face manually. In many instances, this is time consuming and thus more costly than then those processes that are more fully automated. Therefore, the need to eliminate the use of activator, from both an environmental and an economic point of view, makes the composition described in this invention very desirable.

### Summary of the Invention

The present invention provides a two part thermally conductive adhesive composition useful for bonding electrical components comprising:
a first part comprising:
   (i) a polymerisable monomer component which is (meth)acrylate based;
   (ii) a peroxide-based curing agent component;
   (iii) one or more co- curative components selected from primary, secondary or tertiary amines or compounds containing the group -CONHNH-;
   (iv) a stabilising component; and;
   (v) a filler component; and;
a second part comprising:
   (i) a polymerisable monomer component which is (meth)acrylate based;
   (ii) a catalytic component for catalysing the cure reaction;
   (iii) a stabilising component; and;
   (iv) a filler component,
where at least one part of the composition has a filler component which comprises a thermally conductive filler. The thermally conductive filler can be in the first part or the second part or both parts but is desirably in the second part.

The composition of the present invention, when used for bonding purposes in the types of situations described above in which it is desirable to conduct thermal energy away from temperature sensitive parts, affords full fixturing in 5 minutes, does not use activator and exhibits thermal conductivity in the range of 0.7-2.0 W/mK.

The composition of the present invention can be used for heat sink attachment to electronic packages for example BGA and QFP.

### Detailed Description of the Invention

The thermally conductive two part adhesive compositions of the present invention, which may be used for the bonding of transformers, transistors and other heat generating electronic components to printed circuit board assemblies or heat sinks, include a first part comprising a resin and a second part comprising a hardener.

The first part comprises components (i) to (v) below:
(i) a polymerisable monomer component which is (meth)acrylate based. Typically an amount in the range of 20-50% by weight of the total weight of the first part. More typically in the range 25-40%, even more typically in the range 30-35%. The polymerisable monomer is at least one selected from: (meth)acrylic acid, (meth)acrylate, di(meth)acrylate, and (meth)acrylate with hydroxyl, glycidyl, or amino groups. The polymerisable monomer may be at least one member selected from: alkyl acrylates, cycloalkyl acrylates, alkyl methacrylates, cycloalkyl methacrylates, alkoxy acrylates, alkoxy methacrylates, alkylene diacrylates and alkylene dimethacrylates. Desirably, the polymerisable monomer comprises at least one (meth)acrylate.
   Among the desirable monofunctional monomers are methyl methacrylate, lauryl methacrylate, 2-ethyl hexyl methacrylate, ethyl methacrylate, n-butyl methacrylate, iso-butyl methacrylate and t-butyl methacrylate. Even more desirably, the polymerisable monomer is at least one selected from: hydroxypropyl methacrylate, tetrahydrofurfuryl methacrylate or 2-ethylhexyl methacrylate. Suitable combinations of the forgoing can be used.
(ii) a peroxide-based curing agent component typically in the range of 0.1-5% by weight of the total weight of the first part. More typically in the range 0.5-3% by weight of the total weight of the first part, even more typically in the range 1-1.5% by weight of the total weight of the first part. Desirably the peroxide based curing agent is at least one selected from: peroxides, hydroperoxides, peresters, persalts, peracids, methylethylketone hydroperoxide, and hydroperoxides formed by oxygenation of various hydrocarbons such as methylbutene, cetane and cyclohexane and various ketones and ethers. More desirably, the peroxide based curing agent is at least one selected from: cumene hyroperoxide, t-butylhydroperoxide, tert-amyl peroxide and 2,5-2,5-dihydroperoxy-2,5-dimethyl hexane. Even more desirably, the peroxide based curing agent is at least one selected from: cumene hydroperoxide, t-amyl hydroperoxide and t-butylhydroperoxide. Suitable combinations of the forgoing can be used.
(iii) at least one co-curative component typically in the range of 0.01 -5% by weight of the total weight of the first part. More typically in the range 0.02-2% by weight of the total weight of the first part, even more typically in the range 0.05-1 % by weight of the total weight of the first part. Desirably the co-curative component is at least one selected from: primary, secondary or tertiary amines or compounds containing the group -CONHNH-. More desirably the co-curative component is at least one selected from: such as N,N-dimethyl-paratoluidine, N,N-dihydroxyethylp-toluidine, dimethyl aniline, diethyl aniline, N,N-diethyl-p-toluidine and 1-acetyl-2-phenylhydrazine. While tertiary aromatic amines, such as those mentioned, are particularly useful, tertiary alkyl amines are also useful. Even more desirably the co-curative component is at least one selected from: 1-acetyl-2-phenylhydrazine and tribuylamine. Suitable combinations of the forgoing can be used.
(iv) a stabilising component typically in the range of 0.1 to 5% by weight of the total weight of the first part. More typically in the range 0.5-2% by weight of the total weight of the first part, even more typically in the range 0.8-1.2% by weight of the total weight of the first part. Desirably the stabilising component is at least one selected from: thiazines, quinones, organic acids and compounds containing an oxazole functionality. More desirably, the stabilising component is at least one selected from: phenothiazine, hydroquinone, oxalic acid and derivatives thereof such as hydrated salts and benzoxazole. Suitable combinations of the forgoing can be used.
(v) a filler component typically in the range of 20-90% by weight of the total weight of the first part. More typically in the range 25-60% by weight of the total weight of the first part, even more typically in the range 35-45% by weight of the total weight of the first part. The filler component may be inorganic or metallic. Desirably the filler component is constructed at least in part from one selected from: iron, aluminium, quartz, zinc, silver, gold, nickel, magnesium, boron, barium, platinum, palladium, copper, zirconium, titanium, niobium, tungsten, and silica, as well as carbon, graphite, talc, silicon carbide and the like, and combinations thereof. More desirably, the conductive filler component is at least one selected from: quartz, silica, talc, silicon carbide. Even more desirably, the thermally filler component is at least one selected from: silica, quartz or talc. Suitable combinations of the forgoing can be used.
   A person skilled in the art would be able to select the most appropriate thermally conductive filler component to use depending on the end use of the composition.

Optionally, the first part may contain the additional components at (i) to (iii) below:
(i) a toughening component in the range of 1-20% by weight of the total weight of the first part. More typically in the range 3-15% by weight of the total weight of the first part, even more typically in the range 5-10% by weight of the total weight of the first part. Desirably the toughening component is at least one selected from the group consisting of: (i) a homopolymer of alkyl esters of acrylic or methacrylic acid; (ii) a homopolymer of an alkoxy ester of acrylic or methacrylic acid; (iii) a copolymer of another polymerizable monomer, such as lower alkenes with an alkyl ester of acrylic or methacrylic acid, or with an alkoxy ester of acrylic or methacrylic acid; (vi) a mixture of any of all of the above (i)-(v). Other unsaturated monomers which may be copolymerized with the alkyl and alkoxy esters of acrylic or methacrylic acid include dienes, reactive halogen-containing unsaturated compounds and other acrylic monomers such as acrylamides. More desirably, the toughening component is at least one selected from the group consisting of: acrylonitrile butadiene methacrylic acid co-polymers such as materials sold under the trade names Hycar or NIPOL. Suitable combinations of the forgoing can be used.
(ii) a thickening component in the range of 0.1-5% by weight of the total weight of the first part. More typically in the range 0.2-2% by weight of the total weight of the first part, even more typically in the range 0.5-1.5% by weight of the total weight of the first part.
(iii) a dye in order to assist manufacturers, retailers and/or the end user to differentiate the first part from the second part in the range of 0.001-2% by weight of the total weight of the first part. More typically in the range 0.002-0.5% by weight of the total weight of the first part, even more typically in the range 0.005-0.01 % by weight of the total weight of the first part.

The second part comprises components (i) to (iv) below:
(i) a polymerisable monomer component typically in the range of 10-90% by weight of the total weight of the second part. More typically in the range 25-45% by weight of the total weight of the second part, even more typically in the range 30-35% by weight of the total weight of the second part. The polymerisable monomer may be acrylate or methacrylate based. Desirably the polymerisable monomer has at least one (meth)acrylate group. Desirably the polymerisable monomer is at least one selected from: (meth)acrylic acid, (meth)acrylate, di(meth)acrylate, and (meth)acrylate with hydroxyl, glycidyl, or amino groups. More desirably, the polymerisable monomer is at least one selected from: alkyl acrylates, cycloalkyl acrylates, alkyl methacrylates, cycloalkyl methacrylates, alkoxy acrylates, alkoxy methacrylates, alkylene diacrylates and alkylene dimethacrylates. Among the preferred monofunctional monomers are methyl methacrylate, lauryl methacrylate, 2-ethyl hexyl methacrylate, ethyl methacrylate, n-butyl methacrylate, iso-butyl methacrylate and t-butyl methacrylate. Even more desirably, the polymerisable monomer is at least one selected from: hydroxypropyl methacrylate, tetrahydrofurfuryl methacrylate or 2-ethylhexyl. Suitable combinations of the forgoing can be used. Typically the polymerisable component is different from the polymerisable component of the first part outlined above. More typically, the polymerisable component is the same as the polymerisable component of the first part outlined above.
(ii) a catalytic component for catalysing the cure reaction typically in the range of 0.01-5% by weight of the total weight of the second part. More typically in the range 0.5-2% by weight of the total weight of the second part, even more typically in the range 0.8-1.5% by weight of the total weight of the second part. Desirably, the catalytic component is based on salts of either Cu, Zr or Co or a combination thereof and in some instances, a promoter which may be derived from esters of organic acids which may be taken from the group succinic, maleic, stearic, adipic. Desirably the catalytic component is at least one salt selected from: but not exclusively, d₄ or d₉ transition metals and their salts. More desirably, the catalytic component is at least one selected from: copper, zinc, cobalt, zirconium, titanium, vanadium, iron, ruthenium, rhodium. Even more desirably, the catalytic component is at least one selected from: copper, zirconium or cobalt or combinations thereof. Suitable combinations of the forgoing can be used. It will be obvious to a person skilled in the art that the catalytic component of the second part should be selected to complement the components of the first part outlined above so that the catalytic component can catalyse the cure reaction of the composition.
(iii) a stabilising component typically in the range of 0.1 to 5% by weight of the total weight of the second part. More typically in the range 0.5-2.0% by weight of the total weight of the second part, even more typically in the range 0.8-1.2% by weight of the total weight of the second part. Desirably the stabilising component is at least one selected from the group consisting of: thiazines, quinones, organic acids and compounds containing an oxazole functionality. More desirably, the stabilising component is at least one selected from: phenothiazine, hydroquinone, oxalic acid and derivatives such as hydrated salts and benzoxazole. Suitable combinations of the forgoing can be used.
   The stabilising component can be either the same or different to the stabilising component of the first part.
(iv) a filler component typically in the range of 20-90% by weight of the total weight of the first part. More typically in the range 25-50% by weight of the total weight of the first part, even more typically in the range 35-45% by weight of the total weight of the first part. The thermally conductive filler component may be inorganic or metallic. Desirably the filler component is at least one selected from: iron, aluminium, zinc, silver, gold, nickel, magnesium, boron, barium, platinum, palladium, copper, zirconium, titanium, niobium, tungsten, silica and conductive derivatives thereof, as well as carbon, graphite, silicon carbide and the like, and combinations thereof. More desirably, the thermally conductive filler component is at least one selected from: alumina, boron nitride, silicon nitride, zinc oxide. Even more desirably, the thermally conductive filler component is at least one selected from: boron nitride, alumina, silicon nitride. Suitable combinations of the forgoing can be used.

A person skilled in the art would be able to select the most appropriate thermally conductive filler component to use depending on the end use of the composition.

Optionally, the second part may contain the additional components (i) to (ii) below:
(i) a diluent in the range of 20-50% by weight of the total weight of the second part. More typically in the range 25-45% by weight of the total weight of the second part, even more typically in the range 30-40% by weight of the total weight of the second part. Desirably the diluent is at least one selected from: methyl methacrylate, cyclohexyl methacrylate, tetrahydrofurfuryl methacrylate, isobornyl methacrylate, hydroxyethyl methacrylate and hydroxypropyl methacrylate, urethane methacrylate. More desirably, the diluent is at least one selected from: methyl methacrylate and urethane methacrylate. Suitable combinations of the forgoing can be used. It would be obvious to a person skilled in the art to select the diluent to complement the other components of the composition outlined above.
   And / or;
(ii) a dye in order to assist manufacturers, retailers and/or the end user to differentiate the second part from the first part in the range of 0.001-2% by weight of the total weight of the second part. More typically in the range 0.001-0.01 % by weight of the total weight of the second part, even more typically in the range 0.005-0.010% by weight of the total weight of the second part. The dye should impart a different colour to the second part compared with the first part.

To obtain an adhesive composition for use in bonding electrical components, the end user blends the first part and the second part of the composition. Typically the ratio for the first part : second part is in the range of 0.5 : 1, to 6 : 1 0.75 : 1 to 5 : 1, 2.5 : 1 to 2 : 1, 1 : 1.

The adhesive composition formed by blending the suitable ratios of the first part and the second part typically cures at a temperature in the range of about 0 to 50°C, more typically in the range of 0 to 40°C, even more typically in the range of 0 to 30°C.

It is desirable that the mixture of the first part and the second part of the adhesive composition to cure in about 30 minutes from the time when the two parts were mixed, more desirably in about 15 minutes from the time when the two parts were mixed, even more desirably in about 10 minutes or less from the time when the two parts were mixed. Mixing can be achieved by blending.

Following curing of the two-part thermally conductive adhesive of the present invention, the fully cured material affords thermal conductivities in the range of about 0.2 to 5.0 W/mK, more desirably in the range of about 0.5 to 3.0 W/mK, even more desirably in the range of about 0.8 to 2.0 W/mK. The skilled person will be in a position to select the constituent components to achieve the desired end result.

Bulk thermal conductivity measurements were carried out in accordance with ASTM-C177-63. The thermal conductivity of a cured adhesive is determined by placing a test sample between two temperature controlled heater plates. One heater is set at a higher temperature than the other to produce a heat flow through the sample. When the temperature of the sample has stabilised the thermal conductivity is electronically determined by the test apparatus. Thermal conductivity is defined here as the time rate of steady heat flow through a unit area, per temperature gradient, in the direction perpendicular to the isotherm surface. This is described in the following formula
Rs = d/k

Where Rs = thermal resistance in m²K/W
d = sample thickness
k = thermal conductivity

The present invention will be more readily appreciated with reference to the Examples which follow.

### Examples

### Example 1

A two component mixture according to the present invention comprising a first part and a second part were prepared as follows:

### Part A:

79g of Hydroxypropylmethacrylate (HPMA 98, supplied by Rohm GmbH) and 12.7g of a co-polymer of acrylonitrile butadiene methacrylic acid (Nipol 1072 CG treated, supplied by ContiTECH GmbH) were dissolved over a 10 hour period at a temperature of 60°C. The batch temperature was cooled to 40°C and 0.7 g of 1-acetyl-2-phenylhydrazine was added and mixing continued until dissolution of the solid had taken place. 2.8g of cumene hydroperoxide (Luperox CU-90, supplied by Atofina) and 0.2g of tributylamine were added and mixing continued until a homogenous composition was obtained. This mixture was stored at 5°C until required for use.

### Part B:

15.9g of urethane methacrylate polyester resin was pre-heated to a temperature of 40°C and a blend of 21.24g ofmethacrylate resin and a blend of 7.62g fumed silica in methacrylic monomer were added and blended. 1.77g of acrylic acid and 8.85g of methacryloxyethyl succinate were added. To this mixture was also added 1.29g of a stabiliser solution comprising phenothiazine, hydroquinone, oxalic acid dihydrate and benzoxazole in triethylene glycol dimethacrylate. To this mix was added 0.012g of 4-methoxyphenol and the whole mixture was blended until homogenous. A blend of 0.03g of Cu salts of C₆-C₁₉ branched fatty acids in a hydrocarbon solvent (as marketed under the brand name Soligen Copper 8, supplied by Borchers GmbH) and a blend of 1.18g of Co (II) and zirconium salts of C₆-C₁₉ branched fatty acids in a hydrocarbon solvent (as marketed under the brand name Octa Soligen Trockner 69, supplied by Borchers GmbH) were added. The mixture was blended until homogenous and stored at 5°C until ready for use.

In the following examples, a selection of fillers are added to the components first part and second part that have been prepared by the method of Example 1. The first part and second part are subsequently combined so as to form a composite. The composite material is left at room temperature (21°C) for 24 hours during which time full cure is effected. Once cured, the thermal conductivities of the composites are measured.

### Example 2

A mixture is formed by blending 65% by weight of the first part with 35% quartz silica (Silbond FW 300EST, supplied by Quarzwerke). In a separate vessel, a second mixture is formed by blending 50% by weight of the second part with 50% by weight of aluminium oxide (Calcinated alumina A10, 325 mesh, supplied by Alcoa Alumina and Chemicals). The two mixtures are then added together in a 1:1 ratio and compressed between two Teflon plates. This action encourages blending of the two separate mixtures and allows the formation of a disc of material which when cured, is suitable for thermal conductivity measurement. The cure chemistry of this composition is such that good fixturing occurs within 5 minutes of adding the first mixture to the second mixture at ambient temperature (21°C). Fixturing in this instance is defined as the ease with which two grit-blasted aluminium lapshears (of thickness 1.0mm) may be pulled apart. When dispensed in a 1:1 ratio and placed between two lapshears, the composition of this invention will fixture so that the lap-shears may not be pulled apart after 5 minutes manually. After 24 hours at ambient temperature, full cure has taken place as determined by lap shear testing on aluminium laps. After 24 hours, the resulting cured disc of material was tested for bulk thermal conductivity in accordance with ASTM C-177-63. This sample afforded a thermal conductivity of 0.60 W/mK.

### Example 3

A mixture is formed by blending 65% by weight of the first part with 35% quartz silica (Silbond FW 300EST, supplied by Quarzwerke). In a separate vessel, a second mixture is formed by blending 50% by weight of the second part with 50% by weight of zinc oxide (Kadox 930, supplied by Zinc Corporation of America). The two mixtures are then added together in a 1:1 ratio and compressed between two Teflon plates. This action encourages blending of the two separate mixtures and allows the formation of a disc of material which when cured, is suitable for thermal conductivity measurement. The cure chemistry of this composition is such that good fixturing occurs within 5 minutes of adding the first mixture to the second mixture at ambient temperature (21°C). After 24 hours at ambient temperature, full cure has taken place as determined by lap shear testing on aluminium laps (as described above). After 24 hours, the resulting cured disc of material was tested for bulk thermal conductivity in accordance with ASTM C-177-63 (as described above). The thermal conductivity of this composite was 0.65 W/mK.

### Example 4

A mixture is formed by blending 42% by weight of the first part with 58% quartz silica (Silbond FW 300EST, supplied by Quarzwerke). In a separate vessel, a second mixture is formed by blending 65% by weight of the second part with 35% by weight of boron nitride (BN SGPS grade, supplied by Denka). The two mixtures are then added together in a 1:1 ratio and compressed between two Teflon plates. This action encourages blending of the two separate mixtures and allows the formation of a disc of material which when cured, is suitable for thermal conductivity measurement. The cure chemistry of this composition is such that good fixturing occurs within 5 minutes of adding the first mixture to the second mixture at ambient temperature (21°C). After 24 hours at ambient temperature, full cure has taken place as determined by lap shear testing on aluminium laps (as described above). After 24 hours, the resulting cured disc of material was tested for bulk thermal conductivity in accordance with ASTM C-177-63 (as described above). The thermal conductivity of this composite was 0.94 W/mK.

### Example 5

A mixture is formed by blending 42% by weight of the first part with 58% quartz silica (Silbond FW 300EST, supplied by Quarzwerke). In a separate vessel, a second mixture is formed by blending 59% by weight of the second part with 41 % by weight of boron nitride (BN SGPS grade, supplied by Denka). The two mixtures are then added together in a 1:1 ratio and compressed between two Teflon plates. This action encourages blending of the two separate mixtures and allows the formation of a disc of material which when cured, is suitable for thermal conductivity measurement. The cure chemistry of this composition is such that good fixturing occurs within 5 minutes of adding the first mixture to the second mixture at ambient temperature. After 24 hours at ambient temperature, full cure has taken place as determined by lap shear testing on aluminium laps (as described above). After 24 hours, the resulting cured disc of material was tested for bulk thermal conductivity in accordance with ASTM C-177-63 (as described above). The thermal conductivity of this composite was 1.79 W/mK.

### Example 6

A mixture is formed by blending 42% by weight of the first part with 58% quartz silica (Silbond FW 300EST, supplied by Quarzwerke). In a separate vessel, a second mixture is formed by blending 59% by weight of the second part with 20.5% by weight of boron nitride (BN SGPS grade, supplied by Denka) and 20.5% of silicon nitride 9SN-F1, supplied by Denka). The two mixtures are then added together in a 1:1 ratio and compressed between two Teflon plates. This action encourages blending of the two separate mixtures and allows the formation of a disc of material which when cured, is suitable for thermal conductivity measurement. The cure chemistry of this composition is such that good fixturing occurs within 5 minutes of adding the first mixture to the second mixture at ambient temperature (21°C). After 24 hours at ambient temperature, full cure has taken place as determined by lap shear testing on aluminium laps (as described above). After 24 hours, the resulting cured disc of material was tested for bulk thermal conductivity in accordance with ASTM C-177-63 (as described above). The thermal conductivity of this composite was 1.85 W/mK.

### Example 7

A composition according to the present invention was prepared in the following way:

The first part of the composition was prepared using the components of Table 1.

**Table 1- Components of part A**

| **Type of material** | **Material** | **Overall % weight of material in the first part** |
|---|---|---|
| Polymerisable monomer | Hydroxypropyl methacrylate | 33.39 |
| Stabilising component | hydroquinone | 0.921 |
| Tertiary alkyl hydroperoxide | Cumene hydroperoxide e.g Luperox | 1.18 |
| Co-curative | Tributyl amine | 0.084 |
| Co-curative | 1-Acetyl-2-phenylhydrazine | 0.294 |
| Toughener | Acrylonitrile butadiene methacrylic acid co-polymer | 5.35 |
| Co-curative | Polyamide | 0.777 |
| Dye | Dye | 0.004 |
| Thermally conductive filler | Quartz (silicon dioxide, epoxy-silane treated) | 58 |

The second part of the composition was prepared using the components of Table 2:

**Table 2 - Components of part B**

| **Type of material** | **Material** | **Overall % weight of material in the second part** |
|---|---|---|
| Stabilising component | hydroquinone | 1.298 |
| Viscosity control reagent | Premix of silica in methacrylic monomer | 7.620 |
| Promoter | Methacryloxyethyl succinate | 8.850 |
| Dye | Dye | 0.006 |
| Catalytic component | Blend of Co (II) and Zr salts of C₆-C₁₉ branched fatty acids in a hydrocarbon solvent | 1.180 |
| Catalytic component | Blend of Cu salts of C₆-C₁₉ branched fatty acids in a hydrocarbon solvent | 0.030 |
| Polymerisable monomer | Urethane methacrylate polyester resin | 15.930 |
| Polymerisable monomer | Methacrylate resin in monomer | 21.240 |
| Polymerisable monomer | Acrylic acid | 1.770 |
| Polymerisable monomer | 4-methoxyphenol | 0.012 |
| Thermally conductive filler | Silicon dioxide | 1.064 |
| Thermally conductive filler | Boron nitride | 41.000 |

Both the first and the second part have a shelf life of 1 year at 5°C

It is appreciated that certain features of the invention, which are, for clarity, described in the context of separate embodiments, may also be provided in combination in a single embodiment. Conversely, various features of the invention which are, for brevity, described in the context of a single embodiment, may also be provided separately or in any suitable subcombination.

The words "comprises/comprising" and the words "having/including" when used herein with reference to the present invention are used to specify the presence of stated features, integers, steps or components but does not preclude the presence or addition of one or more other features, integers, steps, components or groups thereof.

## Claims

1. A two-part curable composition which cures to form a thermally conductive cure product comprising:
a first part comprising:
(i) at least one polymerisable (meth)acrylate-based monomer component;
(ii) a peroxide-based curing agent component;
(iii) one or more co-curative components selected from the group consisting of primary, secondary or tertiary amines or compounds containing the group-CONHNH- ;
(iv) a stabilising component, and;
(v) a filler component; and
a second part comprising:
(i) at least one polymerisable (meth)acrylate-based monomer component;
(ii) a catalytic component for catalysing the cure reaction;
(iii) a stabilising component, and;
(vi) a thermally conductive filler component,
wherein at least one part of the composition has a filler component which comprises a thermally conductive filler.

2. A composition as claimed in claim 1 wherein the thermally conductive filler can be in the first part or the second part or both parts but is desirably in the second part.

3. A composition as claimed in claim 1 wherein the first part and the second part are provided in a ratio range of 6:1 to 1:1, first part:second part.

4. A composition as claimed in claim 1 wherein the composition cures at a temperature in the range of from 0 to about 30 °C.

5. A composition as claimed in claim 1 wherein the composition cures in a period of about 30 minutes or less from the time the first and second parts are brought together.

6. A composition as claimed in claim 1 which cures to form a cure product with a thermal conductivity in the range of from 0.2 to 5.0 W/mK.

7. A composition as claimed in claim 1 wherein the polymerisable monomer of the first part is present in the range of from 20 to 50% by weight of the total weight of the first part.

8. A composition as claimed in claim 1 wherein the peroxide based curing agent of the first part is present in the range of about 0.1 to 5% by weight of the total weight of the first part.

9. A composition as claimed in claim 1 wherein the co-curative components of the first part are present in the range of from 0.01 to 5% by weight of the total weight of the first part.

10. A composition as claimed in claim 1 wherein the stabilising component of the first part is present in the range of from 0.1 to 5% by weight of the total weight of the first part.

11. A composition as claimed in claim 1 wherein the filler of the first part is present in the range of from 20 to 90% by weight of the total weight of the first part.

12. A composition as claimed in claim 1 wherein the polymerisable monomer of the second part is present in the range of from 10 to 90% by weight of the total weight of the second part.

13. A composition as claimed in claim 1 wherein the catalytic component of the second part is present in the range of from 0.01 to 5% by weight of the total weight of the second part.

14. A composition as claimed in claim 1 wherein the stabilising component of the second part is present in the range of from 0.1 to 5% by weight of the total weight of the second part.

15. A composition as claimed in claim 1 wherein the filler of the second part is present in the range of from about 20 to 90% by weight of the total weight of the second part.

16. A composition as claimed in claim 1 wherein the first part further comprises at least one toughening component selected from: (i) a homopolymer of alkyl esters of acrylic or methacrylic acid; (ii) a homopolymer of an alkoxy ester of acrylic or methacrylic acid; (iii) a copolymer of a polymerizable monomer, such as lower alkenes with an alkyl ester of acrylic or methacrylic acid, or with an alkoxy ester of acrylic or methacrylic acid; (iv) a combination of any or all of the above (i)-(iii).

17. A composition as claimed in claim 16 wherein the toughening component is selected from: unsaturated monomers which may be copolymerized with the alkyl and alkoxy esters of acrylic or methacrylic acid including dienes, reactive halogen-containing unsaturated compounds and other acrylic monomers such as acrylamides.

18. A composition as claimed in claim 1 wherein the first part further comprises a thickening component.

19. A composition as claimed in claim 1 wherein the first part further comprises a dye component.

20. A composition as claimed in claim 1 wherein the second part further comprises at least one diluent selected from: methyl methacrylate, cyclohexyl methacrylate, tetrahydrofurfuryl methacrylate, isobornyl methacrylate, hydroxyethyl methacrylate and hydroxypropyl methacrylate, urethane methacrylate and combinations thereof.

21. A composition as claimed in claim 1 wherein both the first and second parts further comprise a dye component.

22. A composition as claimed in claim 1 wherein the polymerisable monomer of the first part is selected from: (meth)acrylic acid, (meth)acrylate, di(meth)acrylate, and (meth)acrylate with hydroxyl, glycidyl, or amino groups and combinations thereof

23. A composition as claimed claim 1 wherein the peroxide-based curing agent component of the first part is selected from: peroxides, hydroperoxides, peresters, persalts and peracids and combinations thereof.

24. A composition as claimed claim 1 wherein the at least one co-curative component of the first part is selected from: N,N-dimethyl-paratoluidine, N,N-dihydroxyethyl-p-toluidine, dimethyl aniline, diethyl aniline, N,N-diethyl-p-toluidine and 1-acetyl-2-phenylhydrazine and combinations thereof.

25. A composition as claimed claim 1 wherein the stabilising component of the first part is selected from: thiazines, quinones, organic acids and compounds containing an oxazole functionality.

26. A composition as claimed claim 1 wherein the filler component of the first part is selected from: iron, aluminium, quartz, zinc, silver, gold, nickel, magnesium, boron, barium, platinum, palladium, copper, zirconium, titanium, niobium, tungsten, silica and conductive derivatives thereof, as well as carbon, graphite, silicon carbide and combinations thereof.

27. A composition as claimed claim 1 wherein the polymerisable monomer component of the second part is selected from: (meth)acrylic acid, (meth)acrylate, di(meth)acrylate, and (meth)acrylate with hydroxyl, glycidyl, or amino groups.

28. A composition as claimed claim 1 wherein the catalytic component of the second part is at least one salt selected from: d₄ or d₉ transition metals and their salts.

29. A composition as claimed claim 1 wherein the stabilising component of the second part is selected from: thiazines, quinones, organic acids and compounds containing an oxazole functionality.

30. A composition as claimed claim 1 wherein the filler component of the second part is selected from: iron, aluminium, zinc, silver, gold, nickel, magnesium, boron, barium, platinum, palladium, copper, zirconium, titanium, niobium, tungsten, silica and conductive derivatives thereof, as well as carbon, graphite, silicon carbide and combinations thereof.

31. Use of a two-part curable composition which cures to form a thermally conductive cure product said composition comprising:
a first part comprising:
(i) at least one polymerisable (meth)acrylate-based monomer component;
(ii) a peroxide-based curing agent component;
(iii) one or more co-curative components selected from the group consisting of primary, secondary or tertiary amines or compounds containing the group-CONHNH- ;
(iv) a stabilising component, and;
(v) a filler component;
second part comprising:
(i) at least one polymerisable (meth)acrylate-based monomer component;
(ii) a catalytic component for catalysing the cure reaction;
(iv) a stabilising component, and;
(v) a filler component,
for the bonding of a heat generating component to a substrate wherein at least one part of the composition has a filler component which comprises a thermally conductive filler.

32. Use of the composition of claim 31 wherein the thermally conductive filler can be in the first part or the second part or both parts but is desirably in the second part.

33. Use of the composition of claim 31 wherein the polymerisable monomer of the first part is present in the range of from 20 to 50% by weight of the total weight of the first part.

34. Use of the composition of claim 31 wherein the peroxide based curing agent of the first part is present in the range of from 0.1 to 5% by weight of the total weight of the first part.

35. Use of the composition of claim 31 wherein the co-curative components of the first part are present in the range of from 0.01 to 5% by weight of the total weight of the first part.

36. Use of the composition of claim 31 wherein the stabilising component of the first part is present in the range of from 0.1 to 5% by weight of the total weight of the first part.

37. Use of the composition of claim 31 wherein the filler of the first part is present in the range of from 20 to 90% by weight of the total weight of the first part.

38. Use of the composition of claim 31 wherein the polymerisable monomer of the second part is present in the range of from 10 to 90% by weight of the total weight of the second part.

39. Use of the composition of claim 31 wherein the catalytic component of the second part is present in the range of from 0.01 to 5% by weight of the total weight of the second part.

40. Use of the composition of claim 31 wherein the stabilising component of the second part is present in the range of from 0.1 to 5% by weight of the total weight of the second part.

41. Use of the composition of claim 31 wherein the thermally conductive filler of the second part is present in the range of from 20 to 90% by weight of the total weight of the second part.

42. Use of the composition of claim 31 wherein the first part further comprises at least one toughening component selected from: (i) a homopolymer of alkyl esters of acrylic or methacrylic acid ; (ii) a homopolymer of an alkoxy ester of acrylic or methacrylic acid; (iii) a copolymer of a polymerizable monomer, such as lower alkenes with an alkyl ester of acrylic or methacrylic acid, or with an alkoxy ester of acrylic or methacrylic acid ; (iv) a combination of any or all of the above (i)-(iii).

43. A composition as claimed in claim 42 wherein the toughening component is selected from: unsaturated monomers which may be copolymerized with the alkyl and alkoxy esters of acrylic or methacrylic acid including dienes, reactive halogen-containing unsaturated compounds and other acrylic monomers such as acrylamides.

44. Use of the composition of claim 31 wherein the first part further comprises a thickening component.

45. Use of the composition of claim 31 wherein the first part further comprises a dye component.

46. Use of the composition of claim 31 wherein the second part further comprises at least one diluent selected from: methyl methacrylate, cyclohexyl methacrylate, tetrahydrofurfuryl methacrylate, isobornyl methacrylate, hydroxyethyl methacrylate and hydroxypropyl methacrylate, urethane methacrylate and combinations thereof.

47. Use of the composition of claim 31 wherein both the first and second parts further comprise a dye component.

48. Use of the composition of claim 31 wherein the polymerisable monomer of the first part is selected from: (meth)acrylic acid, (meth)acrylate, di(meth)acrylate, and (meth)acrylate with hydroxyl, glycidyl, or amino groups and combinations thereof.

49. Use of the composition of claim 31 wherein the peroxide-based curing agent component of the first part is selected from: peroxides, hydroperoxides, peresters, persalts and peracids and combinations thereof.

50. Use of the composition of claim 31 wherein the at least one co-curative component(s) of the first part is selected from: N,N-dimethyl-paratoluidine, N,N-dihydroxyethyl-p-toluidine, dimethyl aniline, diethyl aniline, N,N-diethyl-p-toluidine and 1-acetyl-2phenylhydrazine and combinations thereof

51. Use of the composition of claim 31 wherein the stabilising component of the first part is selected from: thiazines, quinones, organic acids and compounds containing an oxazole functionality and combinations thereof.

52. Use of the composition of claim 31 wherein the filler component of the first part is selected from: iron, aluminium, quartz, zinc, silver, gold, nickel, magnesium, boron, barium, platinum, palladium, copper, zirconium, titanium, niobium, tungsten, silica and conductive derivatives thereof, as well as carbon, graphite, silicon carbide and combinations thereof.

53. Use of the composition of claim 31 wherein the polymerisable monomer component of the second part is selected from: (meth)acrylic acid, (meth)acrylate, di(meth)acrylate, and (meth)acrylate with hydroxyl, glycidyl, or amino groups and combinations thereof.

54. Use of the composition of claim 31 wherein the catalytic component of the second part is at least one salt selected from d₄ or d₉ transition metals and their salts.

55. Use of the composition of claim 31 wherein the stabilising component of the second part is selected from: thiazines, quinones, organic acids and compounds containing an oxazole functionality and combinations thereof.

56. Use of the composition of claim 31 wherein the thermally conductive filler component of the second part is selected from: iron, aluminium, zinc, silver, gold, nickel, magnesium, boron, barium, platinum, palladium, copper, zirconium, titanium, niobium, tungsten, silica and conductive derivatives thereof, as well as carbon, graphite, silicon carbide and combinations thereof.

57. Use according to claim 31 wherein the substrate comprises a heat sink.

58. Use according to claim 57 wherein the heat generating component is an electrical or electronic component.

59. Use according to claim 55 wherein the composition is used to bond the heat generating component directly to the heat sink.

60. A kit comprising the composition of claim 1 wherein the first part and second part are housed in at least one container which holds the first part and second part apart prior to use.

61. An assembly comprising a heat generating component bonded to a substrate by the cure product of a composition according to claim 1.

62. The cure product of a composition according to claim 1.

## Patentansprüche

1. Eine härtbare Zwei-Komponenten-Zusammensetzung, die beim Härten ein wärmeleitendes gehärtetes Produkt bildet, umfassend:
eine erste Komponente, umfassend:
(i) wenigstens eine polymerisierbare Monomerkomponente auf (Meth)acrylatbasis,
(ii) eine Härterkomponente auf Peroxidbasis,
(iii) eine oder mehrere Co-Härterkomponenten, ausgewählt aus der Gruppe, bestehend aus primären, sekundären oder tertiären Aminen oder Verbindungen, die die Gruppe -CONHNH- enthalten,
(iv) eine Stabilisierungskomponente und
(v) eine Füllstoffkomponente, und
eine zweite Komponente, umfassend:
(i) wenigstens eine polymerisierbare Monomerkomponente auf (Meth)acrylatbasis,
(ii) eine katalytische Komponente zur Katalysierung der Härtungsreaktion,
(iii) eine Stabilisierungskomponente und
(vi) eine wärmeleitende Füllstoffkomponente,
wobei wenigstens eine Komponente der Zusammensetzung eine Füllstoffkomponente enthält, die einen wärmeleitenden Füllstoff umfasst.

2. Eine wie in Anspruch 1 beanspruchte Zusammensetzung, wobei der wärmeleitende Füllstoff in der ersten Komponente oder in der zweiten Komponente oder in beiden Komponenten vorliegen kann, vorzugsweise jedoch in der zweiten Komponente vorliegt.

3. Eine wie in Anspruch 1 beanspruchte Zusammensetzung, wobei die erste Komponente und die zweite Komponente in einem Verhältnis im Bereich von 6:1 bis 1:1, erste Komponente : zweite Komponente, zur Verfügung gestellt werden.

4. Eine wie in Anspruch 1 beanspruchte Zusammensetzung, wobei die Zusammensetzung bei einer Temperatur im Bereich von 0 bis etwa 30°C härtet.

5. Eine wie in Anspruch 1 beanspruchte Zusammensetzung, wobei die Zusammensetzung in einem Zeitraum von etwa 30 Minuten oder kürzer ab dem Zeitpunkt des Zusammenbringens der ersten und der zweiten Komponente härtet.

6. Eine wie in Anspruch 1 beanspruchte Zusammensetzung, die zu einem gehärteten Produkt mit einer Wärmeleitfähigkeit im Bereich von 0,2 bis 5,0 W/mK härtet.

7. Eine wie in Anspruch 1 beanspruchte Zusammensetzung, wobei das polymerisierbare Monomer der ersten Komponente im Bereich von 20 bis 50 Gew.-% des Gesamtgewichts der ersten Komponente vorliegt.

8. Eine wie in Anspruch 1 beanspruchte Zusammensetzung, wobei das Härtungsmittel auf Peroxidbasis der ersten Komponente im Bereich von etwa 0,1 bis 5 Gew.-% des Gesamtgewichts der ersten Komponente vorliegt.

9. Eine wie in Anspruch 1 beanspruchte Zusammensetzung, wobei die Co-Härterkomponenten der ersten Komponente im Bereich von 0,01 bis 5 Gew.-% des Gesamtgewichts der ersten Komponente vorliegen.

10. Eine wie in Anspruch 1 beanspruchte Zusammensetzung, wobei die Stabilisierungskomponente der ersten Komponente im Bereich von 0,1 bis 5 Gew.-% des Gesamtgewichts der ersten Komponente vorliegt.

11. Eine wie in Anspruch 1 beanspruchte Zusammensetzung, wobei der Füllstoff der ersten Komponente im Bereich von 20 bis 90 Gew.-% des Gesamtgewichts der ersten Komponente vorliegt.

12. Eine wie in Anspruch 1 beanspruchte Zusammensetzung, wobei das polymerisierbare Monomer der zweiten Komponente im Bereich von 10 bis 90 Gew.-% des Gesamtgewichts der zweiten Komponente vorliegt.

13. Eine wie in Anspruch 1 beanspruchte Zusammensetzung, wobei die katalytische Komponente der zweiten Komponente im Bereich von 0,01 bis 5 Gew.-% des Gesamtgewichts der zweiten Komponente vorliegt.

14. Eine wie in Anspruch 1 beanspruchte Zusammensetzung, wobei die Stabilisierungskomponente der zweiten Komponente im Bereich von 0,1 bis 5 Gew.-% des Gesamtgewichts der zweiten Komponente vorliegt.

15. Eine wie in Anspruch 1 beanspruchte Zusammensetzung, wobei der Füllstoff der zweiten Komponente im Bereich von etwa 20 bis 90 Gew.-% des Gesamtgewichts der zweiten Komponente vorliegt.

16. Eine wie in Anspruch 1 beanspruchte Zusammensetzung, wobei die erste Komponente ferner wenigstens eine Komponente zur Verbesserung der Schlagzähigkeit umfasst, ausgewählt aus: (i) einem Homopolymer aus Alkylestern von Acryl- oder Methacrylsäure, (ii) einem Homopolymer aus einem Alkoxyester von Acryl- oder Methacrylsäure, (iii) einem Copolymer aus einem polymerisierbaren Monomer, wie z.B. Niederalkenen, mit einem Alkylester von Acryl- oder Methacrylsäure oder mit einem Alkoxyester von Acryl- oder Methacrylsäure, (iv) einer Kombination aus beliebigen oder allen der obigen Punkte (i) - (iii).

17. Eine wie in Anspruch 16 beanspruchte Zusammensetzung, wobei die Komponente zur Verbesserung der Schlagzähigkeit ausgewählt ist aus: ungesättigten Monomeren, die mit den Alkyl- und Alkoxyestern von Acryl- oder Methacrylsäure copolymerisiert werden können, einschließlich Diene, reaktive halogenhaltige ungesättigte Verbindungen und andere Acrylmonomere, wie z.B. Acrylamide.

18. Eine wie in Anspruch 1 beanspruchte Zusammensetzung, wobei die erste Komponente ferner eine Verdickungskomponente enthält.

19. Eine wie in Anspruch 1 beanspruchte Zusammensetzung, wobei die erste Komponente ferner eine Farbstoffkomponente enthält.

20. Eine wie in Anspruch 1 beanspruchte Zusammensetzung, wobei die zweite Komponente ferner wenigstens ein Verdünnungsmittel enthält, ausgewählt aus: Methylmethacrylat, Cyclohexylmethacrylat, Tetrahydrofurfurylmethacrylat, Isobornylmethacrylat, Hydroxyethylmethacrylat und Hydroxypropylmethacrylat, Urethanmethacrylat und Kombinationen davon.

21. Eine wie in Anspruch 1 beanspruchte Zusammensetzung, wobei sowohl die erste als auch die zweite Komponente ferner eine Farbstoffkomponente enthalten.

22. Eine wie in Anspruch 1 beanspruchte Zusammensetzung, wobei das polymerisierbare Monomer der ersten Komponente ausgewählt ist aus: (Meth)acrylsäure, (Meth)acrylat, Di(meth)acrylat und (Meth)acrylat mit Hydroxyl-, Glycidyl- oder Aminogruppen und Kombinationen davon.

23. Eine wie in Anspruch 1 beanspruchte Zusammensetzung, wobei das Härtungsmittel auf Peroxidbasis der ersten Komponente ausgewählt ist aus: Peroxiden, Hydroperoxiden, Perestern, Persalzen und Persäuren und Kombinationen davon.

24. Eine wie in Anspruch 1 beanspruchte Zusammensetzung, wobei die wenigstens eine Co-Härterkomponente der ersten Komponente ausgewählt ist aus: N,N-Dimethyl-para-toluidin, N,N-Dihydroxyethyl-p-toluidin, Dimethylanilin, Diethylanilin, N,N-Diethyl-p-toluidin und 1-Acetyl-2-phenylhydrazin und Kombinationen davon.

25. Eine wie in Anspruch 1 beanspruchte Zusammensetzung, wobei die Stabilisierungskomponente der ersten Komponente ausgewählt ist aus: Thiazinen, Chinonen, organischen Säuren und Verbindungen, die eine Oxazol-Funktionalität enthalten.

26. Eine wie in Anspruch 1 beanspruchte Zusammensetzung, wobei die Füllstoffkomponente der ersten Komponente ausgewählt ist aus: Eisen, Aluminium, Quarz, Zink, Silber, Gold, Nickel, Magnesium, Bor, Barium, Platin, Palladium, Kupfer, Zirkonium, Titan, Niob, Wolfram, Siliziumdioxid und leitenden Derivaten davon sowie Kohlenstoff, Graphit, Siliziumcarbid und Kombinationen davon.

27. Eine wie in Anspruch 1 beanspruchte Zusammensetzung, wobei die polymerisierbare Monomerkomponente der zweiten Komponente ausgewählt ist aus: (Meth)acrylsäure, (Meth)acrylat, Di(meth)acrylat und (Meth)acrylat mit Hydroxyl-, Glycidyl- oder Aminogruppen.

28. Eine wie in Anspruch 1 beanspruchte Zusammensetzung, wobei die katalytische Komponente der zweiten Komponente wenigstens ein Salz ist, ausgewählt aus:
d₄- oder d₉-Übergangsmetallen und deren Salze.

29. Eine wie in Anspruch 1 beanspruchte Zusammensetzung, wobei die Stabilisierungskomponente der zweiten Komponente ausgewählt ist aus:
Thiazinen, Chinonen, organischen Säuren und Verbindungen, die eine Oxazol-Funktionalität enthalten.

30. Eine wie in Anspruch 1 beanspruchte Zusammensetzung, wobei die Füllstoffkomponente der zweiten Komponente ausgewählt ist aus: Eisen, Aluminium, Zink, Silber, Gold, Nickel, Magnesium, Bor, Barium, Platin, Palladium, Kupfer, Zirkonium, Titan, Niob, Wolfram, Siliziumdioxid und leitenden Derivaten davon sowie Kohlenstoff, Graphit, Siliziumcarbid und Kombinationen davon.

31. Verwendung einer härtbaren Zwei-Komponenten-Zusammensetzung, die beim Härten ein wärmeleitendes gehärtetes Produkt bildet, umfassend:
eine erste Komponente, umfassend:
(i) wenigstens eine polymerisierbare Monomerkomponente auf (Meth)acrylatbasis,
(ii) eine Härterkomponente auf Peroxidbasis,
(iii) eine oder mehrere Co-Härterkomponenten, ausgewählt aus der Gruppe, bestehend aus primären, sekundären oder tertiären Aminen oder Verbindungen, die die Gruppe -CONHNH- enthalten,
(iv) eine Stabilisierungskomponente und
(v) eine Füllstoffkomponente,
eine zweite Komponente, umfassend:
(i) wenigstens eine polymerisierbare Monomerkomponente auf (Meth)acrylatbasis,
(ii) eine katalytische Komponente zur Katalysierung der Härtungsreaktion,
(iii) eine Stabilisierungskomponente und
(vi) eine Füllstoffkomponente,
zur Bindung einer wärmeerzeugenden Komponente an ein Substrat, wobei wenigstens eine Komponente der Zusammensetzung eine Füllstoffkomponente enthält, die einen wärmeleitenden Füllstoff umfasst.

32. Verwendung der Zusammensetzung gemäß Anspruch 31, wobei der wärmeleitende Füllstoff in der ersten Komponente oder in der zweiten Komponente oder in beiden Komponenten vorliegen kann, vorzugsweise jedoch in der zweiten Komponente vorliegt.

33. Verwendung der Zusammensetzung gemäß Anspruch 31, wobei das polymerisierbare Monomer der ersten Komponente im Bereich von 20 bis 50 Gew.-% des Gesamtgewichts der ersten Komponente vorliegt.

34. Verwendung der Zusammensetzung gemäß Anspruch 31, wobei das Härtungsmittel auf Peroxidbasis der ersten Komponente im Bereich von etwa 0,1 bis 5 Gew.-% des Gesamtgewichts der ersten Komponente vorliegt.

35. Verwendung der Zusammensetzung gemäß Anspruch 31, wobei die Co-Härterkomponenten der ersten Komponente im Bereich von 0,01 bis 5 Gew.-% des Gesamtgewichts der ersten Komponente vorliegen.

36. Verwendung der Zusammensetzung gemäß Anspruch 31, wobei die Stabilisierungskomponente der ersten Komponente im Bereich von 0,1 bis 5 Gew.-% des Gesamtgewichts der ersten Komponente vorliegt.

37. Verwendung der Zusammensetzung gemäß Anspruch 31, wobei der Füllstoff der ersten Komponente im Bereich von 20 bis 90 Gew.-% des Gesamtgewichts der ersten Komponente vorliegt.

38. Verwendung der Zusammensetzung gemäß Anspruch 31, wobei das polymerisierbare Monomer der zweiten Komponente im Bereich von 10 bis 90 Gew.-% des Gesamtgewichts der zweiten Komponente vorliegt.

39. Verwendung der Zusammensetzung gemäß Anspruch 31, wobei die katalytische Komponente der zweiten Komponente im Bereich von 0,01 bis 5 Gew.-% des Gesamtgewichts der zweiten Komponente vorliegt.

40. Verwendung der Zusammensetzung gemäß Anspruch 31, wobei die Stabilisierungskomponente der zweiten Komponente im Bereich von 0,1 bis 5 Gew.-% des Gesamtgewichts der zweiten Komponente vorliegt.

41. Verwendung der Zusammensetzung gemäß Anspruch 31, wobei der wärmeleitende Füllstoff der zweiten Komponente im Bereich von 20 bis 90 Gew.-% des Gesamtgewichts der zweiten Komponente vorliegt.

42. Verwendung der Zusammensetzung gemäß Anspruch 31, wobei die erste Komponente ferner wenigstens eine Komponente zur Verbesserung der Schlagzähigkeit umfasst, ausgewählt aus: (i) einem Homopolymer aus Alkylestern von Acryl- oder Methacrylsäure, (ii) einem Homopolymer aus einem Alkoxyester von Acryl- oder Methacrylsäure, (iii) einem Copolymer aus einem polymerisierbaren Monomer, wie z.B. Niederalkenen, mit einem Alkylester von Acryl- oder Methacrylsäure oder mit einem Alkoxyester von Acryl- oder Methacrylsäure, (iv) einer Kombination aus beliebigen oder allen der obigen Punkte (i) - (iii).

43. Eine wie in Anspruch 42 beanspruchte Zusammensetzung, wobei die Komponente zur Verbesserung der Schlagzähigkeit ausgewählt ist aus: ungesättigten Monomeren, die mit den Alkyl- und Alkoxyestern von Acryl- oder Methacrylsäure copolymerisiert werden können, einschließlich Diene, reaktive halogenhaltige ungesättigte Verbindungen und andere Acrylmonomere, wie z.B. Acrylamide.

44. Verwendung der Zusammensetzung gemäß Anspruch 31, wobei die erste Komponente ferner eine Verdickungskomponente enthält.

45. Verwendung der Zusammensetzung gemäß Anspruch 31, wobei die erste Komponente ferner eine Farbstoffkomponente enthält.

46. Verwendung der Zusammensetzung gemäß Anspruch 31, wobei die zweite Komponente ferner wenigstens ein Verdünnungsmittel enthält, ausgewählt aus:
Methylmethacrylat, Cyclohexylmethacrylat, Tetrahydrofurfurylmethacrylat, Isobornylmethacrylat, Hydroxyethylmethacrylat und Hydroxypropylmethacrylat, Urethanmethacrylat und Kombinationen davon.

47. Verwendung der Zusammensetzung gemäß Anspruch 31, wobei sowohl die erste als auch die zweite Komponente ferner eine Farbstoffkomponente enthalten.

48. Verwendung der Zusammensetzung gemäß Anspruch 31, wobei das polymerisierbare Monomer der ersten Komponente ausgewählt ist aus:
(Meth)acrylsäure, (Meth)acrylat, Di(meth)acrylat und (Meth)acrylat mit Hydroxyl-, Glycidyl- oder Aminogruppen und Kombinationen davon.

49. Verwendung der Zusammensetzung gemäß Anspruch 31, wobei das Härtungsmittel auf Peroxidbasis der ersten Komponente ausgewählt ist aus:
Peroxiden, Hydroperoxiden, Perestern, Persalzen und Persäuren und Kombinationen davon.

50. Verwendung der Zusammensetzung gemäß Anspruch 31, wobei die wenigstens eine Co-Härterkomponente der ersten Komponente ausgewählt ist aus: N,N-Dimethyl-para-toluidin, N,N-Dihydroxyethyl-p-toluidin, Dimethylanilin, Diethylanilin, N,N-Diethyl-p-toluidin und 1-Acetyl-2-phenylhydrazin und Kombinationen davon.

51. Verwendung der Zusammensetzung gemäß Anspruch 31, wobei die Stabilisierungskomponente der ersten Komponente ausgewählt ist aus: Thiazinen, Chinonen, organischen Säuren und Verbindungen, die eine Oxazol-Funktionalität enthalten, und Kombinationen davon.

52. Verwendung der Zusammensetzung gemäß Anspruch 31, wobei die Füllstoffkomponente der ersten Komponente ausgewählt ist aus: Eisen, Aluminium, Quarz, Zink, Silber, Gold, Nickel, Magnesium, Bor, Barium, Platin, Palladium, Kupfer, Zirkonium, Titan, Niob, Wolfram, Siliziumdioxid und leitenden Derivaten davon sowie Kohlenstoff, Graphit, Siliziumcarbid und Kombinationen davon.

53. Verwendung der Zusammensetzung gemäß Anspruch 31, wobei die polymerisierbare Monomerkomponente der zweiten Komponente ausgewählt ist aus: (Meth)acrylsäure, (Meth)acrylat, Di(meth)acrylat und (Meth)acrylat mit Hydroxyl-, Glycidyl- oder Aminogruppen und Kombinationen davon.

54. Verwendung der Zusammensetzung gemäß Anspruch 31, wobei die katalytische Komponente der zweiten Komponente wenigstens ein Salz ist, ausgewählt aus d₄-oder d₉-Übergangsmetallen und deren Salzen.

55. Verwendung der Zusammensetzung gemäß Anspruch 31, wobei die Stabilisierungskomponente der zweiten Komponente ausgewählt ist aus:
Thiazinen, Chinonen, organischen Säuren und Verbindungen, die eine Oxazol-Funktionalität enthalten, und Kombinationen davon.

56. Verwendung der Zusammensetzung gemäß Anspruch 31, wobei die wärmeleitende Füllstoffkomponente der zweiten Komponente ausgewählt ist aus:
Eisen, Aluminium, Zink, Silber, Gold, Nickel, Magnesium, Bor, Barium, Platin, Palladium, Kupfer, Zirkonium, Titan, Niob, Wolfram, Siliziumdioxid und leitenden Derivaten davon sowie Kohlenstoff, Graphit, Siliziumcarbid und Kombinationen davon.

57. Verwendung gemäß Anspruch 31, wobei das Substrat einen Wärmeableiter umfasst.

58. Verwendung gemäß Anspruch 57, wobei die wärmeerzeugende Komponente eine elektrische oder elektronische Komponente ist.

59. Verwendung gemäß Anspruch 55, wobei die Zusammensetzung zur direkten Bindung der wärmeerzeugenden Komponente an den Wärmeableiter verwendet wird.

60. Ein Kit, umfassend die Zusammensetzung gemäß Anspruch 1, wobei die erste Komponente und die zweite Komponente in wenigstens einem Behälter untergebracht sind, der die erste Komponente und die zweite Komponente vor der Verwendung getrennt hält.

61. Eine Anordnung, die eine wärmeerzeugende Komponente enthält, die durch das gehärtete Produkt einer Zusammensetzung gemäß Anspruch 1 mit einem Substrat verbunden ist.

62. Das gehärtete Produkt einer Zusammensetzung gemäß Anspruch 1.

## Revendications

1. Composition durcissable en deux parties qui durcit pour former un produit de durcissement thermoconducteur comprenant :
une première partie comprenant :
(i) au moins un composant monomère polymérisable à base de (méth)acrylate ;
(ii) un composant de type agent durcisseur à base de peroxyde ;
(iii) un ou plusieurs composants co-durcisseurs choisis dans le groupe constitué par les amines primaires, secondaires ou tertiaires ou les composés contenant le groupe -CONHNH- ;
(iv) un composant de stabilisation, et ;
(v) un composant de charge ; et
une seconde partie comprenant :
(i) au moins un composant monomère polymérisable à base de (méth)acrylate ;
(ii) un composant catalytique pour catalyser la réaction de durcissement ;
(iii) un composant de stabilisation, et ;
(iv) un composant de charge thermoducteur,
dans laquelle au moins une partie de la composition a un composant de charge qui comprend une charge thermoconductrice.

2. Composition selon la revendication 1 dans laquelle la charge thermoconductrice peut être dans la première partie ou la seconde partie ou les deux parties mais, de manière souhaitable, est dans la seconde partie.

3. Composition selon la revendication 1 dans laquelle la première partie et la seconde partie sont fournies dans une plage de rapports de la première partie à la seconde partie de 6/1 à 1/1.

4. Composition selon la revendication 1 dans laquelle la composition durcit à une température dans la plage de 0 à environ 30 °C.

5. Composition selon la revendication 1 dans laquelle la composition durcit pendant une période d'environ 30 minutes ou moins à partir du moment où les première et seconde parties sont réunies.

6. Composition selon la revendication 1, laquelle durcit pour former un produit de durcissement avec une thermoconductivité dans la plage de 0,2 à 5,0 W/mK.

7. Composition selon la revendication 1 dans laquelle le monomère polymérisable de la première partie est présent dans la plage de 20 à 50 % en poids, sur la base du poids total de la première partie.

8. Composition selon la revendication 1 dans laquelle l'agent durcisseur à base de peroxyde de la première partie est présent dans la plage d'environ 0,1 à 5 % en poids, sur la base du poids total de la première partie.

9. Composition selon la revendication 1 dans laquelle les composants co-durcisseurs de la première partie sont présents dans la plage de 0,01 à 5 % en poids, sur la base du poids total de la première partie.

10. Composition selon la revendication 1 dans laquelle le composant de stabilisation de la première partie est présent dans la plage de 0,1 à 5 % en poids, sur la base du poids total de la première partie.

11. Composition selon la revendication 1 dans laquelle la charge de la première partie est présente dans la plage de 20 à 90 % en poids, sur la base du poids total de la première partie.

12. Composition selon la revendication 1 dans laquelle le monomère polymérisable de la seconde partie est présent dans la plage de 10 à 90 % en poids, sur la base du poids total de la seconde partie.

13. Composition selon la revendication 1 dans laquelle le composant catalytique de la seconde partie est présent dans la plage de 0,01 à 5 % en poids, sur la base du poids total de la seconde partie.

14. Composition selon la revendication 1 dans laquelle le composant de stabilisation de la seconde partie est présent dans la plage de 0,1 à 5 % en poids, sur la base du poids total de la seconde partie.

15. Composition selon la revendication 1 dans laquelle la charge de la seconde partie est présente dans la plage d'environ 20 à 90 % en poids, sur la base du poids total de la seconde partie.

16. Composition selon la revendication 1 dans laquelle la première partie comprend en outre au moins un composant de renforcement choisi parmi : (i) un homopolymère d'esters alkyliques d'acide acrylique ou méthacrylique ; (ii) un homopolymère d'un alcoxyester d'acide acrylique ou méthacrylique ; (iii) un copolymère d'un monomère polymérisable, notamment d'alcènes inférieurs avec un ester alkylique d'acide acrylique ou méthacrylique, ou avec un alcoxyester d'acide acrylique ou méthacrylique ; (iv) une combinaison d'une partie quelconque ou de la totalité des composés (i) à (iii) ci-dessus.

17. Composition selon la revendication 16 dans laquelle le composant de renforcement est choisi parmi : des monomères insaturés pouvant être copolymérisés avec les esters alkyliques et alcoxyesters d'acide acrylique ou méthacrylique, à savoir les diènes, les composés insaturés contenant un halogène réactif et d'autres monomères acryliques tels que les acrylamides.

18. Composition selon la revendication 1 dans laquelle la première partie comprend en outre un composant épaississant.

19. Composition selon la revendication 1 dans laquelle la première partie comprend en outre un composant colorant.

20. Composition selon la revendication 1 dans laquelle la seconde partie comprend en outre au moins un diluant choisi parmi : le méthacrylate de méthyle, le méthacrylate de cyclohexyle, le méthacrylate de tétrahydrofurfuryle, le méthacrylate d'isobornyle, le méthacrylate d'hydroxyéthyle et le méthacrylate d'hydroxypropyle, le méthacrylate d'uréthane et leurs combinaisons.

21. Composition selon la revendication 1 dans laquelle les première et seconde parties comprennent en outre toutes deux un composant colorant.

22. Composition selon la revendication 1 dans laquelle le monomère polymérisable de la première partie est choisi parmi : l'acide (méth)acrylique, le (méth)acrylate, le di(méth)acrylate, et le (méth)acrylate avec des groupes hydroxyle, glycidyle ou amino, et leurs combinaisons.

23. Composition selon la revendication 1 dans laquelle le composant de type agent durcisseur à base de peroxyde de la première partie est choisi parmi : les peroxydes, hydroperoxydes, peresters, persels et peracides et leurs combinaisons.

24. Composition selon la revendication 1 dans laquelle le au moins un composant co-durcisseur de la première partie est choisi parmi : la N,N-diméthyl-paratoluidine, la N,N-dihydroxyéthyl-p-toluidine, la diméthyl aniline, la diéthyl aniline, la N,N-diéthyl-p-toluidine et la 1-acétyl-2-phénylhydrazine et leurs combinaisons.

25. Composition selon la revendication 1 dans laquelle le composant de stabilisation de la première partie est choisi parmi : les thiazines, les quinones, les acides organiques et les composés contenant une fonctionnalité oxazole.

26. Composition selon la revendication 1 dans laquelle le composant de charge de la première partie est choisi parmi : le fer, l'aluminium, le quartz, le zinc, l'argent, l'or, le nickel, le magnésium, le bore, le baryum, le platine, le palladium, le cuivre, le zirconium, le titane, le niobium, le tungstène, la silice et leurs dérivés conducteurs, ainsi que le carbone, le graphite, le carbure de silicium et leurs combinaisons.

27. Composition selon la revendication 1 dans laquelle le composant monomère polymérisable de la seconde partie est choisi parmi : l'acide (méth)acrylique, le (méth)acrylate, le di(méth)acrylate, et le (méth)acrylate avec des groupes hydroxyle, glycidyle ou amino.

28. Composition selon la revendication 1 dans laquelle le composant catalytique de la seconde partie est au moins un sel choisi parmi : les métaux de transition d₄ ou d₉ et leurs sels.

29. Composition selon la revendication 1 dans laquelle le composant de stabilisation de la seconde partie est choisi parmi : les thiazines, les quinones, les acides organiques et les composés contenant une fonctionnalité oxazole.

30. Composition selon la revendication 1 dans laquelle le composant de charge de la seconde partie est choisi parmi : le fer, l'aluminium, le zinc, l'argent, l'or, le nickel, le magnésium, le bore, le baryum, le platine, le palladium, le cuivre, le zirconium, le titane, le niobium, le tungstène, la silice et leurs dérivés conducteurs, ainsi que le carbone, le graphite, le carbure de silicium et leurs combinaisons.

31. Utilisation d'une composition durcissable en deux parties qui durcit pour former un produit de durcissement thermoconducteur, ladite composition comprenant :
une première partie comprenant :
(i) au moins un composant monomère polymérisable à base de (méth)acrylate ;
(ii) un composant de type agent durcisseur à base de peroxyde ;
(iii) un ou plusieurs composants co-durcisseurs choisis dans le groupe constitué par les amines primaires, secondaires ou tertiaires ou les composés contenant le groupe -CONHNH- ;
(iv) un composant de stabilisation, et ;
(v) un composant de charge ; et
une seconde partie comprenant :
(i) au moins un composant monomère polymérisable à base de (méth)acrylate ;
(ii) un composant catalytique pour catalyser la réaction de durcissement ;
(iii) un composant de stabilisation, et ;
(iv) un composant de charge,
pour le collage d'un composant thermogène sur un substrat, dans laquelle au moins une partie de la composition a un composant de charge qui comprend une charge thermoconductrice.

32. Utilisation de la composition selon la revendication 31 dans laquelle la charge thermoconductrice peut être dans la première partie ou la seconde partie ou les deux parties mais, de manière souhaitable, est dans la seconde partie.

33. Utilisation de la composition selon la revendication 31 dans laquelle le monomère polymérisable de la première partie est présent dans la plage de 20 à 50 % en poids, sur la base du poids total de la première partie.

34. Utilisation de la composition selon la revendication 31 dans laquelle l'agent durcisseur à base de peroxyde de la première partie est présent dans la plage de 0,1 à 5 % en poids, sur la base du poids total de la première partie.

35. Utilisation de la composition selon la revendication 31 dans laquelle les composants co-durcisseurs de la première partie sont présents dans la plage de 0,01 à 5 % en poids, sur la base du poids total de la première partie.

36. Utilisation de la composition selon la revendication 31 dans laquelle le composant de stabilisation de la première partie est présent dans la plage de 0,1 à 5 % en poids, sur la base du poids total de la première partie.

37. Utilisation de la composition selon la revendication 31 dans laquelle la charge de la première partie est présente dans la plage de 20 à 90 % en poids, sur la base du poids total de la première partie.

38. Utilisation de la composition selon la revendication 31 dans laquelle le monomère polymérisable de la seconde partie est présent dans la plage de 10 à 90 % en poids, sur la base du poids total de la seconde partie.

39. Utilisation de la composition selon la revendication 31 dans laquelle le composant catalytique de la seconde partie est présent dans la plage de 0,01 à 5 % en poids, sur la base du poids total de la seconde partie.

40. Utilisation de la composition selon la revendication 31 dans laquelle le composant de stabilisation de la seconde partie est présent dans la plage de 0,1 à 5 % en poids, sur la base du poids total de la seconde partie.

41. Utilisation de la composition selon la revendication 31 dans laquelle la charge thermoconductrice de la seconde partie est présente dans la plage de 20 à 90 % en poids, sur la base du poids total de la seconde partie.

42. Utilisation de la composition selon la revendication 31 dans laquelle la première partie comprend en outre au moins un composant de renforcement choisi parmi : (i) un homopolymère d'esters alkyliques d'acide acrylique ou méthacrylique ; (ii) un homopolymère d'un alcoxyester d'acide acrylique ou méthacrylique ; (iii) un copolymère d'un monomère polymérisable, notamment d'alcènes inférieurs avec un ester alkylique d'acide acrylique ou méthacrylique, ou avec un alcoxyester d'acide acrylique ou méthacrylique ; (iv) une combinaison d'une partie quelconque ou de la totalité des composés (i) à (iii) ci-dessus.

43. Composition selon la revendication 42, dans laquelle le composant de renforcement est choisi parmi : des monomères insaturés pouvant être copolymérisés avec les esters alkyliques et alcoxyesters d'acide acrylique ou méthacrylique, à savoir les diènes, les composés insaturés contenant un halogène réactif et d'autres monomères acryliques tels que les acrylamides.

44. Utilisation de la composition selon la revendication 31 dans laquelle la première partie comprend en outre un composant épaississant.

45. Utilisation de la composition selon la revendication 31 dans laquelle la première partie comprend en outre un composant colorant.

46. Utilisation de la composition selon la revendication 31 dans laquelle la seconde partie comprend en outre au moins un diluant choisi parmi : le méthacrylate de méthyle, le méthacrylate de cyclohexyle, le méthacrylate de tétrahydrofurfuryle, le méthacrylate d'isobornyle, le méthacrylate d'hydroxyéthyle et le méthacrylate d'hydroxypropyle, le méthacrylate d'uréthane et leurs combinaisons.

47. Utilisation de la composition selon la revendication 31 dans laquelle les première et seconde parties comprennent en outre toutes deux un composant colorant.

48. Utilisation de la composition selon la revendication 31 dans laquelle le monomère polymérisable de la première partie est choisi parmi : l'acide (méth)acrylique, le (méth)acrylate, le di(méth)acrylate, et le (méth)acrylate avec des groupes hydroxyle, glycidyle ou amino, et leurs combinaisons.

49. Utilisation de la composition selon la revendication 31 dans laquelle le composant de type agent durcisseur à base de peroxyde de la première partie est choisi parmi : les peroxydes, hydroperoxydes, peresters, persels et peracides et leurs combinaisons.

50. Utilisation de la composition selon la revendication 31 dans laquelle le au moins un composant co-durcisseur de la première partie est choisi parmi : la N,N-diméthyl-paratoluidine, la N,N-dihydroxyéthyl-p-toluidine, la diméthyl aniline, la diéthyl aniline, la N,N-diéthyl-p-toluidine et la 1-acétyl-2-phénylhydrazine et leurs combinaisons.

51. Utilisation de la composition selon la revendication 31 dans laquelle le composant de stabilisation de la première partie est choisi parmi : les thiazines, les quinones, les acides organiques et les composés contenant une fonctionnalité oxazole et leurs combinaisons.

52. Utilisation de la composition selon la revendication 31 dans laquelle le composant de charge de la première partie est choisi parmi : le fer, l'aluminium, le quartz, le zinc, l'argent, l'or, le nickel, le magnésium, le bore, le baryum, le platine, le palladium, le cuivre, le zirconium, le titane, le niobium, le tungstène, la silice et leurs dérivés conducteurs, ainsi que le carbone, le graphite, le carbure de silicium et leurs combinaisons.

53. Utilisation de la composition selon la revendication 31 dans laquelle le composant monomère polymérisable de la seconde partie est choisi parmi : l'acide (méth)acrylique, le (méth)acrylate, le di(méth)acrylate, et le (méth)acrylate avec des groupes hydroxyle, glycidyle ou amino et leurs combinaisons.

54. Utilisation de la composition selon la revendication 31 dans laquelle le composant catalytique de la seconde partie est au moins un sel choisi parmi les métaux de transition d₄ ou d₉ et leurs sels.

55. Utilisation de la composition selon la revendication 31 dans laquelle le composant de stabilisation de la seconde partie est choisi parmi : les thiazines, les quinones, les acides organiques et les composés contenant une fonctionnalité oxazole et leurs combinaisons.

56. Utilisation de la composition selon la revendication 31 dans laquelle le composant de charge thermoconducteur de la seconde partie est choisi parmi : le fer, l'aluminium, le zinc, l'argent, l'or, le nickel, le magnésium, le bore, le baryum, le platine, le palladium, le cuivre, le zirconium, le titane, le niobium, le tungstène, la silice et leurs dérivés conducteurs, ainsi que le carbone, le graphite, le carbure de silicium et leurs combinaisons.

57. Utilisation selon la revendication 31 dans laquelle le substrat comprend un puits thermique.

58. Utilisation selon la revendication 57 dans laquelle le composant thermogène est un composant électrique ou électronique.

59. Utilisation selon la revendication 55 dans laquelle la composition est utilisée pour coller le composant thermogène directement sur le puits thermique.

60. Trousse comprenant la composition selon la revendication 1 dans laquelle la première partie et la seconde partie sont placées dans au moins un récipient qui maintient la première partie et la seconde partie séparées avant l'utilisation.

61. Ensemble comprenant un composant thermogène collé à un substrat par le produit de durcissement d'une composition selon la revendication 1.

62. Produit de durcissement d'une composition selon la revendication 1.
